# EUROPÄISCHE PATENTSCHRIFT

(11) **EP 3 789 214 B1**
(45) Veröffentlichungstag und Bekanntmachung des Hinweises auf die Patenterteilung: **08.03.2023**
(21) Anmeldenummer: 20192116.0
(22) Anmeldetag: 21.08.2020
(51) Int. Cl.: B60C 11/13

(54) **FAHRZEUGLUFTREIFEN**
PNEUMATIC TYRE
PNEUMATIQUE DE VÉHICULE

(30) Priorität: 06.09.2019 DE 102019213570
(43) Veröffentlichungstag der Anmeldung: 10.03.2021
(73) Patentinhaber: Continental Reifen Deutschland GmbH, 30165 Hannover (DE)
(72) Erfinder: Behr, Ulrich, 30419 Hannover (DE)
(74) Vertreter: Continental Corporation

(56) Entgegenhaltungen:
- JP-A- 2006 264 480
- KR-A- 20070 055 872
- US-A1- 2013 228 255

## Beschreibung

Die Erfindung betrifft einen Fahrzeugluftreifen mit einem profilierten Laufstreifen mit zumindest einer Umfangsrille mit einem Rillengrund und zwei Rillenflanken, wobei am Rillengrund jeweils an beide Rillenflanken angebundene, über den Umfang des Laufstreifens verteilt angeordnete, als Schallbrecher wirkende Vorsprünge ausgebildet sind, wobei in den Vorsprüngen jeweils eine Vielzahl von in Richtung Laufstreifenperipherie offenen Vertiefungen ausgebildet ist, wobei sämtliche in einem Vorsprung ausgebildete Vertiefungen in Summe ein Volumen von 40% bis 60% des Gesamtvolumens des Vorsprunges aufweisen.

Es ist bekannt, dass sich während des Fahrbetriebes in Umfangsrillen von Laufstreifen von Fahrzeugluftreifen Schallwellen bilden, deren Frequenzen in einem für Menschen wahrnehmbaren Bereich (1000 Hz - Bereich) liegen. Derartige Schallwellen breiten sich entlang der Umfangsrillen meist ungehindert aus, wodurch während des Fahrbetriebes unangenehm wahrnehmbare und störende Fahrgeräusche entstehen. Um dem entgegenzuwirken, können innerhalb der Umfangsrillen aus dem Gummimaterial des Laufstreifens gebildete zusätzliche Vorsprünge ("Schallbrecher") angebracht werden, welche die Schallwellen derart stören, dass die Fahrgeräusche reduziert werden. Die als Schallbrecher wirkenden Vorsprünge verringern die Querschnittsfläche der jeweiligen Umfangsrille, wodurch das Wasserdrainagevermögen der Umfangsrille reduziert ist.

Ein Fahrzeugluftreifen der eingangs genannten Art ist beispielsweise aus der US 2013/0228255 A1 bekannt. Der Fahrzeugluftreifen weist einen Laufstreifen mit zumindest einer Umfangsrille auf, auf dessen Rillengrund mindestens ein als Abnützungsindikator vorgesehener Vorsprung ausgebildet ist, dessen Oberfläche mit einer Vielzahl von Vertiefungen versehen ist. Die damit einhergehende Verringerung des Gummivolumens des Abnützungsindikators soll Vorteile bei der Vulkanisation durch verringertes Fließen des Gummimaterials bringen.

Aus der DE 10 2015 212 462 A1 ist ein Fahrzeugluftreifen bekannt, dessen Laufstreifen zumindest eine Umfangsrille aufweist, auf deren Rillengrund ein in Draufsicht sowie in Umfangsrichtung betrachtet S-förmiger Vorsprung ausgebildet ist, welcher zwei gebogene Abschnitte aufweist, die an den Rillenflanken ausgebildete Einbuchtungen durchlaufen. Die Einbuchtungen bilden lokale Verbreitungen der Querschnittsfläche der Umfangsrille, wodurch die durch den Vorsprung bedingte Verringerung der Querschnittsfläche auf eine für das Wasserdrainagevermögen vorteilhafte Weise ausgeglichen werden soll.

Die bisher bekannten als Schallbrecher wirkenden Vorsprünge sind Hinblick auf ihre Auswirkungen auf das Aquaplaningverhalten des Reifens weiterhin verbesserungsbedürftig.

Der Erfindung liegt daher die Aufgabe zugrunde, bei einem Fahrzeugluftreifen der eingangs genannten Art die als Schallbrecher wirkenden Vorsprünge auf eine im Hinblick auf das Aquaplaningverhalten besonders vorteilhafte Weise zu gestalten.

Gelöst wird die gestellte Aufgabe erfindungsgemäß dadurch, dass die Vorsprünge in den beiden Umfangsrichtungen jeweils durch zwei zwischen den Rillenflanken der Umfangsrille verlaufende, in Draufsicht zueinander konvex gekrümmte Stirnflächen begrenzt sind.

Die erfindungsgemäßen als Schallbrecher wirkenden Vorsprünge zeichnen sich daher durch eine offene "Porosität", also einen nach außen offenen Hohlraumvolumenanteil aus. Im Gegensatz zu den bisher bekannten Schallbrechern, bei welchen vor allem versucht wurde, die Schallbrecher möglichst strömungsgünstig auszulegen, nimmt der erfindungsgemäße Schallbrecher durch seine offene Porosität beim Fahren auf nasser Fahrbahn in den Vertiefungen kurzfristig gewisse Mengen an Wasser auf. Die beim Fahren auf nasser Fahrbahn über den Schallbrecher hinwegzuleitende Wassermenge ist daher geringer, wodurch die Gefahr von Aquaplaning reduziert ist. Die erfindungsgemäß getroffenen Maßnahmen gestatten es außerdem, die äußere Gestalt des Vorsprunges auf eine im Hinblick auf seine "schallbrechende" Wirkung vorteilhafte Weise auszulegen bzw. in dieser Hinsicht weiter zu optimieren.

Gemäß einer bevorzugten Ausführung beträgt das Volumen, welches sämtliche in einem Vorsprung ausgebildete Vertiefungen in Summe aufweisen, 45% bis 55% des Gesamtvolumens des Vorsprunges.

Ferner ist es günstig, wenn die Vorsprünge jeweils mit zumindest vier, insbesondere mit sieben bis zwanzig, vorzugsweise mit zehn bis fünfzehn, Vertiefungen versehen sind. Eine "Aufteilung" des Hohlraumvolumenanteiles über eine größere Anzahl von Vertiefungen trägt zu einer vorteilhaften Verteilung von Wasser in den Vertiefungen bei.

Gemäß einer weiteren bevorzugten Ausführung sind die innerhalb eines Vorsprunges ausgebildeten Vertiefungen in zumindest zwei in Umfangsrichtung verlaufenden Reihen angeordnet. Auch diese Maßnahme trägt zu einer wirkungsvollen und gleichmäßigen Wasseraufnahme bei.

Bevorzugter Weise sind die Vorsprünge in radialer Richtung jeweils durch eine parallel zur Laufstreifenperipherie ausgerichtete Deckfläche begrenzt, von welcher die Vertiefungen ausgehen.

Gemäß einer weiteren bevorzugten Ausführung weisen die Vertiefungen in radialer Richtung an ihrer tiefsten Stelle eine Tiefe auf, welche 45% bis 65%, insbesondere 50% bis 60%, der in radialer Richtung ermittelten maximalen Höhe des Vorsprunges beträgt.

Bevorzugt weisen die Vertiefungen an der Deckfläche des Vorsprunges voneinander gegenseitige Abstände von 0,5 mm bis 1,5 mm auf.

Gemäß einer weiteren bevorzugten Ausführung weist der Boden der Vertiefungen zur tiefsten Stelle der Umfangsrille einen in radialer Richtung ermittelten Abstand von mindestens 1,6 mm auf.

Die Vorsprünge sind im Hinblick auf ihre schallbrechende Wirkung und das Wasserdrainagevermögen der Umfangsrille vorteilhaft gestaltet, wenn die Vorsprünge in radialer Richtung eine maximale Höhe von 40% bis 60%, insbesondere von 45% bis 55%, der Tiefe der Umfangsrille aufweisen.

Gemäß einer weiteren bevorzugten Ausführung weisen die Vorsprünge eine mittig durch die Umfangsrille verlaufende und in radialer Richtung ausgerichtete Symmetrieebene und vorzugsweise auch eine in axialer Richtung verlaufende und in radialer Richtung ausgerichtete Symmetrieebene auf. Diese Ausgestaltung ist für die Stabilität und Rissbeständgkeit der Vorsprünge von Vorteil.

Ein für die Wasserdrainage vorteilhaft hohes Rillenleervolumen im Bereich der Vorsprünge bleibt erhalten, wenn die Vorsprünge in Umfangsrichtung eine maximale Länge von 10,0 mm bis 15,0 mm aufweisen.

Um das Entstehen von Einrissen am Rillengrund zu vermeiden, ist es bevorzugt, wenn die Vorsprünge am Rillengrund der Umfangsrille auslaufen.

Gemäß einer weiteren bevorzugten Ausführung sind die Vertiefungen, welche in einem Vorsprung ausgebildet sind, übereinstimmend gestaltet.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vergrößerte, leicht schräge Draufsicht auf einen Ausschnitt eines Laufstreifens im Bereich einer Umfangsrille mit einer Ausführungsvariante der Erfindung,
Fig. 2 einen Schnitt entlang der Linie II-II der Fig. 1,
Fig. 3 einen Schnitt entlang der Linie III-III der Fig. 1 und
Fig. 4 einen Schnitt entlang der Linie IV-IV der Fig. 1.

Gemäß der Erfindung ausgeführte Fahrzeugluftreifen sind Reifen eines beliebigen Typs, insbesondere Reifen in Radialbauart für Personenkraftwagen, Vans oder Light-Trucks.

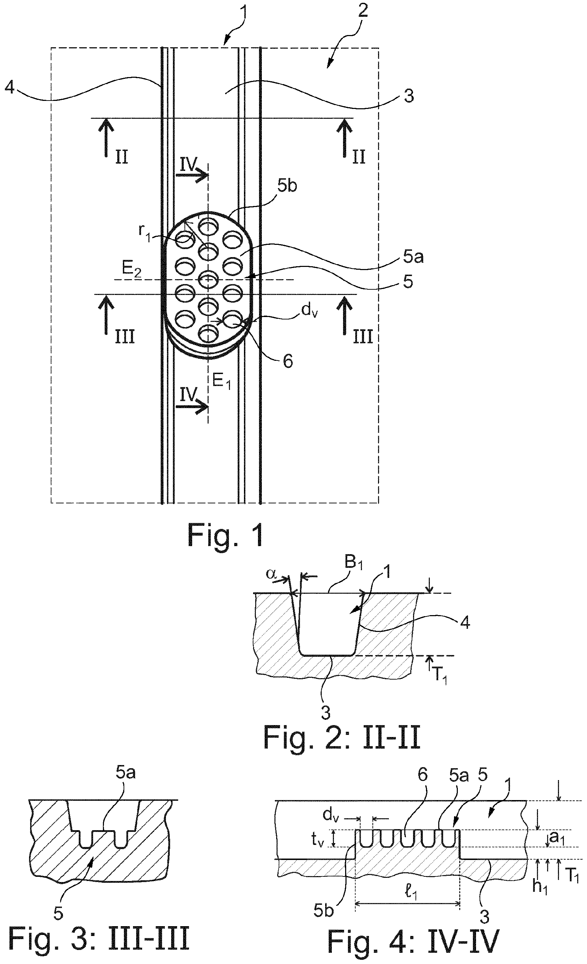

Fig. 1 zeigt eine Draufsicht auf einen Laufstreifenabschnitt im Bereich einer gerade verlaufenden Umfangsrille 1, welche in insbesondere bekannter Weise ausgeführte Profilpositive 2, beispielsweise Profilbänder, voneinander trennt. Die nicht gezeigten Bereiche des Laufstreifens können ebenfalls in bekannter Weise ausgeführt sein.

Gemäß Fig. 2 ist die Umfangsrille 1 in der für den jeweiligen Reifentyp vorgesehenen Profiltiefe T₁ ausgeführt, welche für PKWs, Vans und Light-Trucks üblicherweise 6,5 mm bis 13,0 mm beträgt, weist an der Laufstreifenperipherie in axialer Richtung eine Breite B₁ von insbesondere 6,0 mm bis 10,0 mm sowie ferner einen im Westlichen U-förmigen Querschnitt auf. Die Umfangsrille 1 ist durch einen zumindest im Wesentlichen parallel zur Laufstreifenperipherie verlaufenden Rillengrund 3 und zwei Rillenflanken 4 begrenzt, wobei die Rillenflanken 4, im Querschnitt der Umfangsrille 1 betrachtet, zur radialen Richtung unter einem Winkel α von 0° bis 10°, insbesondere von zumindest 3°, verlaufen.

Wie Fig. 1 zeigt, ist im gezeigten Abschnitt der Umfangsrille 1 ein am Rillengrund 3 aufsitzender und an beide Rillenflanken 4 angebundener, in Draufsicht in Umfangsrichtung langgestreckt ovaler, lokaler Vorsprung 5 ausgebildet. Der Vorsprung 5 wirkt als "Schallbrecher", reduziert im Fahrbetrieb die Geräuschabstrahlung des Reifens, insbesondere im Frequenzbereich um 1000 Hz. Innerhalb der Umfangsrille 1 ist eine Vielzahl von Vorsprüngen 5 ausgebildet, welche insbesondere derart verteilt sind, dass sich im Fahrbetrieb zumindest ein Vorsprung 5 in der Bodenaufstandsfläche befindet. Die Bodenaufstandsfläche entspricht dabei bekannter Weise dem statisch ermittelten Footprint (ermittelt mit einem auf einer Normfelge montierten Reifen, Last bei 70% der maximalen Tragfähigkeit, Innendruck 85% des Normdruckes, gemäß ETRTO-Standards). Die in der Umfangsrille 1 befindlichen Vorsprünge 5 weisen voneinander gegenseitige Abstände von beispielsweise 30 mm bis 70 mm auf.

Der Vorsprung 5 weist eine mittig durch die Umfangsrille 1 verlaufende, in radialer Richtung ausgerichtete, in Fig. 1 mit der Schnittlinie IV-IV zusammenfallende Symmetrieebene E₁ sowie eine orthogonal zur Symmetrieebene E₁ verlaufende Symmetrieebene E₂ auf. Wie Fig. 4 zeigt, weist der Vorsprung 5, ermittelt gegenüber der tiefsten Stelle der Umfangsrille 1, in radialer Richtung eine maximale Höhe h₁ von 40% bis 60%, insbesondere von 45% bis 55%, der Profiltiefe T₁ und in der Symmetrieebene E₁ (vergleiche Fig. 1) eine in Umfangsrichtung am Niveau der Profiltiefe T₁ ermittelte maximale Länge l₁ von 10,0 mm bis 15,0 mm auf.

Wie Fig. 1, Fig. 3 und Fig. 4 zeigen, ist der Vorsprung 5 in radialer Richtung durch eine parallel zur Laufstreifenperipherie verlaufende Deckfläche 5a sowie in den beiden Umfangsrichtungen durch je eine zwischen den beiden Rillenflanken 4 verlaufende Stirnfläche 5b (Fig. 1, Fig. 4) begrenzt.

Gemäß Fig. 1 sind die Stirnflächen 5b in Draufsicht betrachtet zueinander konvex gekrümmt, verlaufen jeweils entlang eines Radius r₁ von 50% bis 70%, insbesondere von 55% bis 65%, der Breite B₁ (Fig. 2) der Umfangsrille 1 und sind, im in Umfangsrichtung ausgerichteten Querschnitt betrachtet, in radialer Richtung ausgerichtet (Fig. 4). Alternativ können die Stirnflächen 5b zur radialen Richtung auch unter einem Winkel von insbesondere bis zu 45°, vorzugsweise von 10° bis 30°, geneigt sein, wobei die Neigung derart erfolgt, dass der Vorsprung 5 in Richtung zum Rillengrund 3 ausläuft.

Der Vorsprung 5 ist mit einer Vielzahl von zur Umfangsrille 1, d.h. in Richtung zur Laufstreifenperipherie, offenen, sacklochförmigen und in Draufsicht kreisförmigen Vertiefungen 6 versehen, welche von der Deckfläche 5a ausgehen, von den Rändern der Deckfläche 5a beabstandet sind, in radialer Richtung in den Vorsprung 5 hineinverlaufen und im Inneren des Vorsprunges 5 enden (Fig. 4). Wie Fig. 4 zeigt, weisen die Vertiefungen 6 einen Durchmesser dv von 1,0 mm bis 2,0 mm und in radialer Richtung eine Tiefe tᵥ von 45% bis 65%, insbesondere von 50% bis 60%, der Höhe h₁ des Vorsprunges 5 auf. Bevorzugter Weise ist die Tiefe tv derart gewählt, dass die radial inneren Enden der Vertiefungen 6 von der tiefsten Stelle der Umfangsrille 1 einen in radialer Richtung ermittelten Abstand a₁ von mindestens 1,6 mm aufweisen. Die Vertiefungen 6 weisen an der Deckfläche 5a voneinander gegenseitige Abstände von 0,5 mm bis 1,5 mm auf.

Wie das Ausführungsbeispiel in Fig. 1 zeigt, sind im Vorsprung 5 drei in Umfangsrichtung verlaufende Reihen von Vertiefungen 6 vorgesehen, wobei eine Reihe von Vertiefungen 6 entlang der Symmetrieebene E₁ und je eine weitere Reihe von Vertiefungen 6 seitlich der Symmetrieebene E₁ verläuft. Die entlang der Symmetrieebene E₁ verlaufende Reihe umfasst fünf, die weiteren Reihen umfassen jeweils vier Vertiefungen 6. Innerhalb jeder Reihe sind die Vertiefungen 6 in Umfangsrichtung gleichmäßig über den Vorsprung 5 verteilt, sodass diese in Umfangsrichtung voneinander übereinstimmende gegenseitige Abstände aufweisen.

Entsprechend der erläuterten Ausgestaltung weist der Vorsprung 5 ein Gesamtvolumen auf, welches aus seinem Gummivolumen und seinem Hohlraumvolumen gebildet ist. Das Hohlraumvolumen entspricht dem Volumen, welches sämtliche Vertiefungen 6 in Summe aufweisen, und beträgt 40% bis 60%, insbesondere 45% bis 55%, des Gesamtvolumens des Vorsprunges 5.

Die Erfindung ist auf die beschriebene Ausführungsvariante nicht beschränkt; der Schutzbereich wird durch die Ansprüche festgelegt.

Erfindungsgemäß ausgebildete Vorsprünge sind vorzugsweise mit zumindest vier Vertiefungen versehen.

### Bezugsziffernliste

- 1: Umfangsrille
- 2: Profilpositiv
- 3: Rillengrund
- 4: Rillenflanke
- 5: Vorsprung
- 5a: Deckfläche
- 5b: Stirnflächen
- 6: Vertiefung
- a₁: Abstand
- B₁: Breite
- d_{V}: Durchmesser
- E₁, E₂: Symmetrieebene
- h₁: maximale Höhe
- l₁: maximale Länge
- r₁: Radius
- T₁: Profiltiefe
- t_{V}: Tiefe
- α: Winkel

## Patentansprüche

1. Fahrzeugluftreifen mit einem profilierten Laufstreifen mit zumindest einer Umfangsrille (1) mit einem Rillengrund (3) und zwei Rillenflanken (4), wobei am Rillengrund (3) jeweils an beide Rillenflanken (4) angebundene, über den Umfang des Laufstreifens verteilt angeordnete, als Schallbrecher wirkende Vorsprünge (5) ausgebildet sind, wobei in den Vorsprüngen (5) jeweils eine Vielzahl von in Richtung Laufstreifenperipherie offenen Vertiefungen (6) ausgebildet ist, wobei sämtliche in einem Vorsprung (5) ausgebildete Vertiefungen (6) in Summe ein Volumen von 40% bis 60% des Gesamtvolumens des Vorsprunges (5) aufweisen
**dadurch gekennzeichnet,**
**dass** die Vorsprünge (5) in den beiden Umfangsrichtungen jeweils durch zwei zwischen den Rillenflanken (4) der Umfangsrille (1) verlaufende, in Draufsicht zueinander konvex gekrümmte Stirnflächen (5b) begrenzt sind.

2. Fahrzeugluftreifen nach Anspruch 1, **dadurch gekennzeichnet, dass** das Volumen, welches sämtliche in einem Vorsprung (5) ausgebildete Vertiefungen (6) in Summe aufweisen, 45% bis 55% des Gesamtvolumens des Vorsprunges (5) beträgt.

3. Fahrzeugluftreifen nach Anspruch 1 oder 2, **dadurch gekennzeichnet, dass** die Vorsprünge (5) jeweils mit zumindest vier, insbesondere mit sieben bis zwanzig, vorzugsweise mit zehn bis fünfzehn, Vertiefungen (6) versehen sind.

4. Fahrzeugluftreifen nach einem der Ansprüche 1 bis 3, **dadurch gekennzeichnet, dass** die in einem Vorsprung (5) ausgebildeten Vertiefungen (6) in zumindest zwei in Umfangsrichtung verlaufenden Reihen angeordnet sind.

5. Fahrzeugluftreifen nach einem der Ansprüche 1 bis 4, **dadurch gekennzeichnet, dass** die Vorsprünge (5) in radialer Richtung jeweils durch eine parallel zur Laufstreifenperipherie ausgerichtete Deckfläche (5a) begrenzt sind, von welcher die Vertiefungen (6) ausgehen.

6. Fahrzeugluftreifen nach einem der Ansprüche 1 bis 5, **dadurch gekennzeichnet, dass** die Vertiefungen (6) in radialer Richtung an ihrer tiefsten Stelle eine Tiefe (t_{V}) aufweisen, welche 45% bis 65%, insbesondere 50% bis 60%, der in radialer Richtung ermittelten maximalen Höhe (h₁) des Vorsprunges (5) beträgt.

7. Fahrzeugluftreifen nach einem der Ansprüche 1 bis 6, **dadurch gekennzeichnet, dass** die Vertiefungen (6) an der Deckfläche (5a) des Vorsprunges (5) voneinander gegenseitige Abstände von 0,5 mm bis 1,5 mm aufweisen.

8. Fahrzeugluftreifen nach einem der Ansprüche 1 bis 7, **dadurch gekennzeichnet, dass** der Boden der Vertiefungen (6) zur tiefsten Stelle der Umfangsrille (1) einen in radialer Richtung ermittelten Abstand (a₁) von mindestens 1,6 mm aufweist.

9. Fahrzeugluftreifen nach einem der Ansprüche 1 bis 8, **dadurch gekennzeichnet, dass** die Vorsprünge (5) in radialer Richtung eine maximale Höhe (h₁) von 40% bis 60%, insbesondere von 45% bis 55%, der Tiefe (T₁) der Umfangsrille (3) aufweisen.

10. Fahrzeugluftreifen nach einem der Ansprüche 1 bis 9, **dadurch gekennzeichnet, dass** die Vorsprünge (5) eine mittig durch die Umfangsrille (1) verlaufende und in radialer Richtung ausgerichtete Symmetrieebene (E₁) aufweisen.

11. Fahrzeugluftreifen nach einem der Ansprüche 1 bis 10, **dadurch gekennzeichnet, dass** die Vorsprünge (5) eine in axialer Richtung verlaufende und in radialer Richtung ausgerichtete Symmetrieebene (E₂) aufweisen.

12. Fahrzeugluftreifen nach einem der Ansprüche 1 bis 11, **dadurch gekennzeichnet, dass** die Vorsprünge (5) in Umfangsrichtung eine maximale Länge (l₁) von 10,0 mm bis 15,0 mm aufweisen.

13. Fahrzeugluftreifen nach einem der Ansprüche 1 bis 12, **dadurch gekennzeichnet, dass** die Vorsprünge (5) am Rillengrund (3) der Umfangsrille (1) auslaufen.

14. Fahrzeugluftreifen nach einem der Ansprüche 1 bis 13, **dadurch gekennzeichnet, dass** die Vertiefungen (6), welche innerhalb eines Vorsprunges (5) ausgebildet sind, übereinstimmend gestaltet sind.

## Claims

1. Pneumatic vehicle tyre having a profiled tread with at least one circumferential channel (1) which has a channel base (3) and has two channel flanks (4), wherein, on the channel base (3), there are formed projections (5) which are attached in each case to both channel flanks (4) and which are arranged in a manner distributed over the circumference of the tread and which act as sound absorbers, wherein, in the projections (5), there is formed in each case a multiplicity of depressions (6) which are open in the direction of the tread periphery, wherein all the depressions (6) formed in a projection (5) altogether have a volume of 40% to 60% of the total volume of the projection (5),
**characterized**
**in that** the projections (5) are delimited in the two circumferential directions in each case by two end surfaces (5b) which extend between the channel flanks (4) of the circumferential channel (1) and which, in plan view, are curved convexly towards one another.

2. Pneumatic vehicle tyre according to Claim 1, **characterized in that** the volume which all the depressions (6) formed in a projection (5) altogether have is 45% to 55% of the total volume of the projection (5).

3. Pneumatic vehicle tyre according to Claim 1 or 2, **characterized in that** the projections (5) are provided in each case with at least four, in particular with seven to twenty, preferably with ten to fifteen, depressions (6).

4. Pneumatic vehicle tyre according to one of Claims 1 to 3, **characterized in that** the depressions (6) formed in a projection (5) are arranged in at least two rows which extend circumferentially.

5. Pneumatic vehicle tyre according to one of Claims 1 to 4, **characterized in that** the projections (5) are delimited radially in each case by a top surface (5a) which is oriented parallel to the tread periphery and from which the depressions (6) depart.

6. Pneumatic vehicle tyre according to one of Claims 1 to 5, **characterized in that**, radially, the depressions (6) have at their lowest point a depth (tv) which is 45% to 65%, in particular 50% to 60%, of the radially determined maximum height (h₁) of the projection (5).

7. Pneumatic vehicle tyre according to one of Claims 1 to 6, **characterized in that**, at the top surface (5a) of the projection (5), the depressions (6) are at mutual distances of 0.5 mm to 1.5 mm from one another.

8. Pneumatic vehicle tyre according to one of Claims 1 to 7, **characterized in that** the base of the depressions (6) is at a radially determined distance (a₁) of at least 1.6 mm from the lowest point of the circumferential channel (1).

9. Pneumatic vehicle tyre according to one of Claims 1 to 8, **characterized in that**, radially, the projections (5) have a maximum height (h₁) of 40% to 60%, in particular of 45% to 55%, of the depth (T₁) of the circumferential channel (3).

10. Pneumatic vehicle tyre according to one of Claims 1 to 9, **characterized in that** the projections (5) have a plane of symmetry (E₁) which extends centrally through the circumferential channel (1) and which is oriented radially.

11. Pneumatic vehicle tyre according to one of Claims 1 to 10, **characterized in that** the projections (5) have a plane of symmetry (E₂) which extends axially and which is oriented radially.

12. Pneumatic vehicle tyre according to one of Claims 1 to 11, **characterized in that**, circumferentially, the projections (5) have a maximum length (l₁) of 10.0 mm to 15.0 mm.

13. Pneumatic vehicle tyre according to one of Claims 1 to 12, **characterized in that** the projections (5) terminate at the channel base (3) of the circumferential channel (1).

14. Pneumatic vehicle tyre according to one of Claims 1 to 13, **characterized in that** the depressions (6) formed within a projection (5) are of corresponding design.

## Revendications

1. Pneumatique de véhicule avec une bande de roulement profilée avec au moins une rainure circonférentielle (1) avec un fond de rainure (3) et deux flancs de rainure (4), des saillies (5) agissant comme des briseurs de bruit, agencées de manière répartie sur la circonférence de la bande de roulement, reliées respectivement aux deux flancs de rainure (4), étant réalisées sur le fond de rainure (3), une pluralité de creux (6) ouverts dans la direction de la périphérie de la bande de roulement étant réalisés respectivement dans les saillies (5), tous les creux (6) réalisés dans une saillie (5) présentant au total un volume de 40 % à 60 % du volume total de la saillie (5),
**caractérisé en ce que**
les saillies (5) sont délimitées dans les deux directions circonférentielles respectivement par deux surfaces frontales (5b) s'étendant entre les flancs de rainure (4) de la rainure circonférentielle (1), courbées de manière convexe l'une par rapport à l'autre en vue de dessus.

2. Pneumatique de véhicule selon la revendication 1, **caractérisé en ce que** le volume que présentent au total tous les creux (6) réalisés dans une saillie (5) représente 45 % à 55 % du volume total de la saillie (5).

3. Pneumatique de véhicule selon la revendication 1 ou 2, **caractérisé en ce que** les saillies (5) sont chacune pourvues d'au moins quatre, notamment de sept à vingt, de préférence de dix à quinze, creux (6).

4. Pneumatique de véhicule selon l'une quelconque des revendications 1 à 3, **caractérisé en ce que** les creux (6) réalisés dans une saillie (5) sont agencés en au moins deux rangées s'étendant dans la direction circonférentielle.

5. Pneumatique de véhicule selon l'une quelconque des revendications 1 à 4, **caractérisé en ce que** les saillies (5) sont délimitées dans la direction radiale respectivement par une surface de recouvrement (5a) orientée parallèlement à la périphérie de la bande de roulement, de laquelle partent les creux (6).

6. Pneumatique de véhicule selon l'une quelconque des revendications 1 à 5, **caractérisé en ce que** les creux (6) présentent dans la direction radiale, à leur point le plus profond, une profondeur (tv) qui représente 45 % à 65 %, en particulier 50 % à 60 %, de la hauteur maximale (h₁) de la saillie (5) déterminée dans la direction radiale.

7. Pneumatique de véhicule selon l'une quelconque des revendications 1 à 6, **caractérisé en ce que** les creux (6) sur la surface de recouvrement (5a) de la saillie (5) présentent des distances mutuelles les uns des autres de 0,5 mm à 1,5 mm.

8. Pneumatique de véhicule selon l'une quelconque des revendications 1 à 7, **caractérisé en ce que** le fond des creux (6) présente une distance (a₁), déterminée dans la direction radiale, d'au moins 1,6 mm par rapport au point le plus profond de la rainure circonférentielle (1).

9. Pneumatique de véhicule selon l'une quelconque des revendications 1 à 8, **caractérisé en ce que** les saillies (5) présentent une hauteur maximale (h₁) dans la direction radiale de 40 % à 60 %, en particulier de 45 % à 55 %, de la profondeur (T₁) de la rainure circonférentielle (3).

10. Pneumatique de véhicule selon l'une quelconque des revendications 1 à 9, **caractérisé en ce que** les saillies (5) présentent un plan de symétrie (E₁) s'étendant au centre à travers la rainure circonférentielle (1) et orienté dans la direction radiale.

11. Pneumatique de véhicule selon l'une quelconque des revendications 1 à 10, **caractérisé en ce que** les saillies (5) présentent un plan de symétrie (E₂) s'étendant dans la direction axiale et orienté dans la direction radiale.

12. Pneumatique de véhicule selon l'une quelconque des revendications 1 à 11, **caractérisé en ce que** les saillies (5) présentent une longueur maximale (l₁) de 10,0 mm à 15,0 mm dans la direction circonférentielle.

13. Pneumatique de véhicule selon l'une quelconque des revendications 1 à 12, **caractérisé en ce que** les saillies (5) se terminent au fond de rainure (3) de la rainure circonférentielle (1).

14. Pneumatique de véhicule selon l'une quelconque des revendications 1 à 13, **caractérisé en ce que** les creux (6) qui sont réalisés à l'intérieur d'une saillie (5) sont conçus sous forme concordante.
